# EUROPÄISCHE PATENTANMELDUNG

(11) **EP 1 731 362 A2**
(43) Veröffentlichungstag der Anmeldung: **13.12.2006**
(21) Anmeldenummer: 06010467.6
(22) Anmeldetag: 20.05.2006
(51) Int. Cl.: B60Q 1/14, B60Q 9/00

(54) **Beleuchtungseinrichtung für ein Personenbeförderungsmittel**

(30) Priorität: 09.06.2005 DE 102005026502
(71) Anmelder: GM Global Technology Operations, Inc., Detroit, MI 48265-3000 (US)
(72) Erfinder: Bald, Heiko, 64397 Modautal (DE); Böhme, Aiko, 55218 Ingelheim (DE)
(74) Vertreter: Daniel, Ulrich W.P.

(57) **Zusammenfassung**

Die Erfindung betrifft eine Beleuchtungseinrichtung für ein Personenbeförderungsmittel, insbesondere ein Kraftfahrzeug mit einem Beleuchtungselement (23), das manuell ein- und ausschaltbar ist und das unter bestimmten Umgebungsbedingungen durch eine Steuereinrichtung (19) abschaltbar, abblendbar oder dämpfbar ist, wobei die Steuereinrichtung (19) mit einer Signaleinrichtung (29 - 32) verbunden ist, die ein erstes Signal an den Führer des Personenbeförderungsmittels abgibt, wenn das Beleuchtungselement (23) manuell eingeschaltet ist und die ein von dem ersten Signal verschiedenes zweites Signal abgibt, wenn das Beleuchtungselement (23) manuell eingeschaltet und durch die Steuereinrichtung abgeschaltet, gedämpft oder abgeblendet ist.

## Beschreibung

Die Erfindung liegt auf dem Gebiet der Bedien- und Kontrollelemente für die Steuerung von Personenbeförderungsmitteln, insbesondere Kraftfahrzeugen. Die Erfindung betrifft dabei eine Beleuchtungseinrichtung der im Oberbegriff des Patentanspruchs 1 genannten Art, also eine Beleuchtungseinrichtung für ein Personenbeförderungsmittel, das manuell ein- und ausschaltbar ist und das unter bestimmten Umgebungsbedingungen durch eine Steuereinrichtung abschaltbar, abblendbar oder dämpfbar ist

Wenn Personenbeförderungsmittel in der Dunkelheit betrieben werden, ist es üblich, einerseits um den Fahrweg erkennen zu können andererseits, um von anderen Verkehrsteilnehmern gut erkannt zu werden, Frontscheinwerfer zu betreiben. Diese sind üblicherweise so gestaltet und ausgerichtet, dass entgegenkommende Verkehrsteilnehmer nicht mehr als notwendig geblendet werden.

Eine besondere Rolle spielen in diesem Zusammenhang Sonderscheinwerfer, beispielsweise für Fernlicht und für die Sonderbeleuchtung, beispielsweise Nebelscheinwerfer. Diese sind nur dann sinnvoll zu betreiben, wenn andere Verkehrsteilnehmer hierdurch nicht gestört werden. Im Normalfall wird beispielsweise das Fernlicht eines Kraftfahrzeuges bei entgegenkommenden Fahrzeugen vom Fahrer abgeschaltet.

Oft wird dies jedoch entweder vergessen, oder aus Müdigkeit oder Nachlässigkeit einfach unterlassen. Hierdurch werden andere Verkehrsteilnehmer gestört und nachhaltig gefährdet.

Es sind deshalb Einrichtungen zur automatischen Abschaltung von Fernlicht bei Kraftfahrzeugen bekannt geworden, die auf das Licht entgegenkommender Fahrzeuge reagieren.

Aus der Deutschen Patentanmeldung DE 103 329 00 A1 ist beispielsweise eine derartige Einrichtung bekannt, bei der die Intensität des Lichtes entgegenkommender Fahrzeuge gemessen und in dem Fall, dass derartige Fahrzeuge registriert werden, das Fernlicht automatisch auf Abblendlicht umgeschaltet wird.

Aus der Deutschen Patentanmeldung DE 196 31 151 A1 ist ebenfalls eine Steuereinrichtung für ein Kraftfahrzeug bekannt, die eine Erfassungseinrichtung für das Licht entgegenkommender Fahrzeuge aufweist und die als Antwort auf die Erfassung derartiger entgegenkommender Fahrzeuge ein Beleuchtungselement dämpft oder abschaltet.

Den bekannten automatischen Einrichtungen zum Abblenden oder Ausschalten bestimmter Beleuchtungselemente ist gemeinsam, dass zwar der entgegenkommende Verkehr nicht weiter durch eine zu intensive Anstrahlung gestört wird, jedoch ist es für den Führer des Kraftfahrzeugs selbst schwierig, im Blick zu behalten, ob das Beleuchtungselement manuell aus- oder eingeschaltet ist oder ob bei manuell eingeschaltetem Beleuchtungselement die automatische Abschaltung aktiviert ist. Dies bemerkt er erst, wenn nach dem Abklingen des Gegenverkehrs die Steuerungseinrichtung das zusätzliche Beleuchtungselement wieder einschaltet oder aufblendet.

Der vorliegenden Erfindung liegt nun die Aufgabe zugrunde, den Schaltzustand der Beleuchtungseinrichtung für den Führer des Personenbeförderungsmittels jederzeit leicht erkennbar zu machen. Insbesondere soll eine übersichtliche Anzeige geschaffen werden, die ohne großen Aufwand wahrnehmbar ist. Dabei sei der Begriff Anzeige nicht nur auf optische Signalgeber beschränkt, sondern umfasst auch andere, von einem Fahrer sinnlich wahrnehmbare Signale.

Erfindungsgemäß wird die der Erfindung zugrunde liegende Aufgabe durch eine Beleuchtungseinrichtung mit den Merkmalen des Patentanspruchs 1 gelöst, also durch eine gattungsgemäße Beleuchtungseinrichtung, die dadurch gekennzeichnet ist, dass die Steuereinrichtung mit einer Signaleinrichtung verbunden ist, die ein erstes Signal an den Führer des Personenbeförderungsmittels abgibt, wenn das Beleuchtungselement manuell eingeschaltet ist und die ein von dem ersten Signal verschiedenes zweites Signal abgibt, wenn das Beleuchtungselement manuell eingeschaltet und durch die Steuereinrichtung abgeschaltet, gedämpft oder abgeblendet ist.

Für den Führer des Personenbeförderungsmittels ist somit jederzeit unterscheidbar, ob die Beleuchtungseinrichtung manuell eingeschaltet ist und auch tatsächlich ihre Funktion ausübt, oder ob sie trotz manueller Einschaltung durch die Steuereinrichtung abgeschaltet, gedämpft oder abgeblendet ist. Dementsprechend kann der Führer des Personenbeförderungsmittels jederzeit ersehen, ob er, wenn eventueller Gegenverkehr abgeflaut ist, das Beleuchtungselement manuell einschalten muss oder ob dies durch die Steuereinrichtung selbsttätig geschehen wird. In dem letzteren Fall kann er seine Aufmerksamkeit anderen Dingen zuwenden, wodurch die Fahrsicherheit erhöht wird.

Eine vorteilhafte Ausgestaltung der Erfindung sieht vor, dass als Eingangsgröße für die Steuereinrichtung eine gemessene Lichtintensität dient.

Wenn beispielsweise für die Steuereinrichtung eine bestimmte Schwelle der erfassten Lichtintensität gesetzt wird, bis zu der diese etwaige Beleuchtungsquellen toleriert, so kann beispielsweise verhindert werden, dass das Fernlicht eines Kraftfahrzeuges abgeschaltet wird, nur weil das Fahrzeug sich in einem Bereich mit Straßenlaternen bewegt. Entgegenkommende andere Kraftfahrzeuge entwickeln durch ihre Frontscheinwerfer dagegen höhere Beleuchtungsintensitäten, die zum Abschalten des Fernlichts führen können.

Die Erfindung kann außerdem vorteilhaft dadurch ausgestaltet werden, dass zur Erfassung der Lichtintensität ein in Fahrtrichtung ausgerichtetes lichtempfindliches Bauelement vorgesehen ist.

Außerdem kann beispielsweise vorgesehen sein, dass das lichtempfindliche Bauelement zur Unterscheidung verschiedener Farben des Lichts eingerichtet ist und dass die Steuereinrichtung auf verschiedene Lichtfarben unterschiedlich reagiert.

Hierdurch kann beispielsweise eine Fallunterscheidung gemacht werden, dahingehend, dass stark leuchtende Rückleuchten voranfahrender Kraftfahrzeuge die Abschaltung der Beleuchtungseinrichtung nicht auslösen.

Außerdem kann vorgesehen sein, dass die Änderungsgeschwindigkeit der gemessenen Lichtintensität erfasst wird.

Dadurch kann beispielsweise verhindert werden, dass nur kurz aufgeblendete Scheinwerfer anderer Fahrzeuge oder andere verkehrsfremde Lichtquellen die Steuereinrichtung ansteuern. Die Lichtintensität entgegenkommender Kraftfahrzeuge bleibt im Normalfall, wenn sich mehrere Fahrzeuge nähern, einigermaßen gleichmäßig oder wächst nur langsam an, wenn sich ein einzelnes Fahrzeug aus größerer Entfernung nähert. Schnelle Änderungsraten der Lichtintensität sprechen für Lichtquellen, die nicht dem normalen entgegenkommenden Verkehr entsprechen.

Die Erfindung kann außerdem vorteilhaft dadurch ausgestaltet sein, dass die Signaleinrichtung eine Kontrollleuchte aufweist. Hierzu kann beispielsweise vorgesehen sein, dass die Kontrollleuchte bei manuell eingeschaltetem Beleuchtungselement und automatischer Abschaltung entweder blinkt oder bezüglich der Lichtstärke gedämpft ist.

Es kann aber auch vorgesehen sein, dass die Signaleinrichtung zusätzlich zu der Kontrollleuchte einen weiteren Signalgeber aufweist, der bei manuell eingeschaltetem Beleuchtungselement und automatischer Abschaltung ein optisches oder akustisches Signal abgibt.

In diesem Fall muss sich der Fahrer nicht auf verschiedene Betriebszustände eines einzelnen Signalgebers konzentrieren sondern er bekommt Informationen von zwei unterschiedlichen Signalgebern, was zu einer besseren Wahrnehmbarkeit der Sonderfunktion führen kann.

Ein besonders vorteilhaftes Verfahren zum Betrieb einer Beleuchtungseinrichtung gemäß der Erfindung sieht vor, dass die Signaleinrichtung während der Dauer der Abschaltung des Beleuchtungselementes durch die Steuereinrichtung ein zweites Signal abgibt, das von dem ersten Signal verschieden ist, welches abgegeben wird, wenn das Beleuchtungselement eingeschaltet ist.

In diesem Fall kann der Fahrer sich jederzeit durch einen Blick auf seine Kontrollinstrumente/Signalelemente einen Überblick über die Betriebsart der Beleuchtungseinrichtung verschaffen.

Es kann alternativ oder zusätzlich dazu auch vorgesehen sein, dass die Signaleinrichtung zu dem Zeitpunkt, wenn die Steuereinrichtung das manuell eingeschaltete Beleuchtungselement abschaltet, abblendet oder dämpft und/oder wenn die Steuereinrichtung die genannte Einwirkung auf das Beleuchtungselement rückgängig macht, ein besonderes Signal abgibt, um anzuzeigen, dass die Betriebsart der Beleuchtungseinrichtung geändert wird.

Hierdurch wird dem Fahrer beim Wechsel der Betriebsart, das heißt dem Abschalten, Abdämpfen oder Abblenden sowie beim Wiedereinschalten des Beleuchtungselementes nachdrücklich kundgetan, dass die Steuereinrichtung eingegriffen hat. Auch dies kann zur Steigerung der Verkehrssicherheit beim Betrieb des Kraftfahrzeuges beziehungsweise Personenbeförderungsmittels beitragen.

Vorteilhafte Ausgestaltungen und Weiterbildungen der Erfindung ergeben sich aus den weiteren Unteransprüchen sowie der Beschreibung unter Bezugnahme auf die Zeichnung.

Im Folgenden wird die Erfindung anhand eines Ausführungsbeispiels in einer Zeichnung gezeigt und anschließend beschrieben. Dabei zeigt:
- Fig. 1: von einem Kraftfahrzeug aus gesehen verschiedene Beleuchtungszonen in perspektivischer Darstellung;
- Fig. 2: Signaleinrichtungen in einem Fahrzeugcockpit;
- Fig. 3: die Steuereinrichtung in einer schematischen Darstellung.

Die Erfindung betrifft beispielsweise eine Beleuchtungseinrichtung in Form des Fernlichts der Frontscheinwerfer eines Kraftfahrzeugs.

Bei diesen ist üblicherweise sowohl das normale Abblendlicht als auch ein Fernlicht vorgesehen, die sich einerseits dadurch unterscheiden, dass deren Leuchtintensität unterschiedlich ist, dass das Fernlicht eine höhere Leistung als das Abblendlicht aufweist und dass andererseits die Ausrichtung der entsprechenden Lichtstrahlen unterschiedlich ist. Abblend- und Fernlicht sind oft als verschiedene Glühfäden in einer einzigen Glühbirne vorgesehen, die von außen unterschiedlich kontaktiert sind. Es kann grundsätzlich aber auch vorgesehen sein, dass das Fernlicht über eine gesonderte Glühbirne realisiert ist.

Anstelle eines Fernlichts kann das Beleuchtungselement, das manuell ein- und ausschaltbar ist, auch durch Nebelscheinwerfer oder durch gesonderte Scheinwerfer oder Scheinwerferelemente realisiert sein, die beispielsweise den Straßenrand ausleuchten, um Fußgänger besser erkennbar zu machen oder um am Straßenrand stehende Verkehrsschilder besser erkennen zu können.

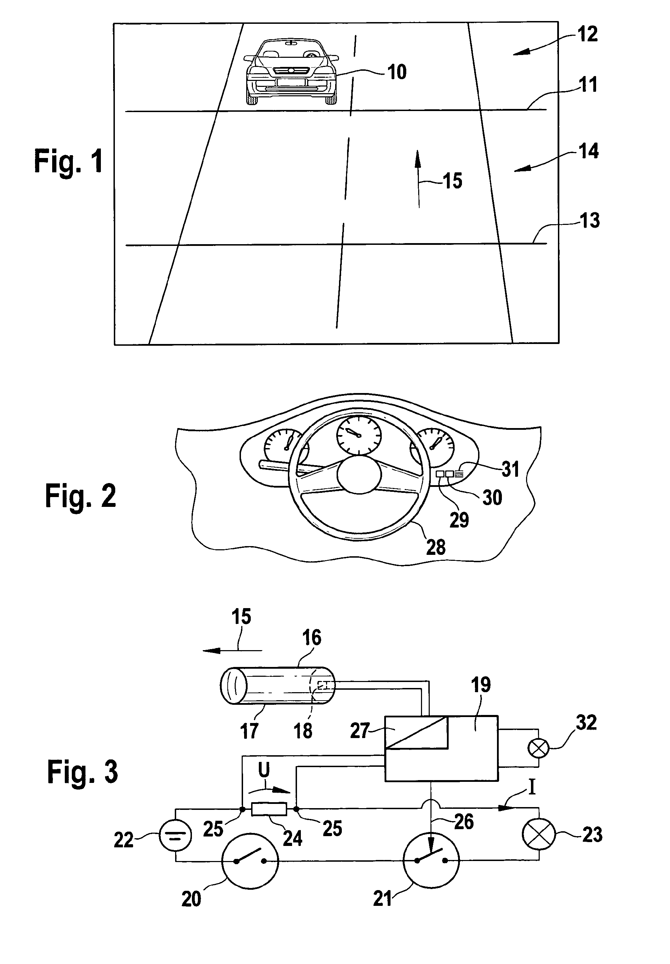

In der Fig. 1 ist dargestellt, dass das typische Fernlicht eine andere Ausrichtung aufweist als das Abblendlicht. Die Darstellung zeigt den Blick aus einem rechts fahrenden Kraftfahrzeug, das selbst nicht dargestellt ist und das mit dem Blick in die Fahrtrichtung unterhalb des unteren Bildrandes positioniert ist. Am oberen Bildrand ist das entgegenkommende Fahrzeug 10 auf der Gegenfahrseite dargestellt. Die oberhalb der Linie 11 liegende Zone 12 wird üblicherweise durch das Fernlicht ausgeleuchtet.

Die zwischen den Linien 13 und 11 liegende Zone 14 wird üblicherweise durch das Abblendlicht ausgeleuchtet. Das bedeutet, dass in der dargestellten Situation das entgegenkommende Fahrzeug 10 im Lichtstrahl des Fernlichts liegt und der Fahrer dieses Fahrzeugs bei eingeschaltetem Fernlicht geblendet wird. In diesem Fall ist es sinnvoll, das Fernlicht auszuschalten und lediglich das Abblendlicht zu betreiben.

Um dies zu automatisieren, ist ein in Fahrtrichtung 15 ausgerichtetes lichtempfindliches (Halbleiter-)Bauelement 16 vorgesehen, das eine Röhre 17 und ein lichtempfindliches Halbleiterbauelement 18 aufweist. Das lichtempfindliches Halbleiter-Bauelement 16 fungiert hier als Lichtsensor oder Lichtdetektor. Die Röhre 17 ist typischerweise so eng ausgebildet, dass nur das entgegen der Fahrtrichtung 15 eintreffende Licht bis zum Boden der Röhre 17 auf das dort angeordnete lichtempfindliche Halbleiterbauelement 18 fällt.

Kommt nun ein Fahrzeug entgegen, so wird das von dessen Scheinwerfer abgestrahlte Licht durch das Halbleiterbauelement 18 detektiert. Anschließend wird ein entsprechendes elektrisches Detektorsignal an eine mit dem Halbleiterbauelement 18 gekoppelte Steuereinrichtung 19, die zum Beispiel als Mikrocontroller, als festverdrahtete Logikeinrichtung oder dergleichen ausgebildet sein kann, abgegeben.

Ist gleichzeitig der manuelle betätigbare Schalter 20 für das Fernlicht geschlossen (er ist in der Figur 3 im geöffneten Zustand dargestellt), so sollte in diesem Zeitpunkt das Fernlicht 23 automatisch abgeschaltet werden. Der über die Steuereinrichtung 19 steuerbare Schalter 21 (er ist in der Figur 3 im geöffneten Zustand dargestellt) ist normalerweise geschlossen, wenn kein Verkehr entgegenkommt. Zumindest einer der Schalter 20, 21 kann beispielsweise als Relais, als Halbleiterschalter (z.B. als MOSFET, JFET, Bipolartransistor, etc.) oder dergleichen ausgebildet sein kann.

In diesem Fall von geschlossenen Schaltern 20, 21 fließt über diese Schalter 20, 21, die Glühbirne 23 des Fernlichts (oder dem entsprechenden Glühfaden) und den Widerstand 24 ein Strom I. Dieser Strom I wird von einer Energiequelle 22 (Spannungs-/Stromquelle) erzeugt, die beispielsweise als Fahrzeugbatterie oder als Generator ausgebildet sein kann.

Mittels eines Spannungsabgriffes 25 wird die über dem Widerstand 25 abfallende Spannung U gemessen. Die Steuereinrichtung 19 erhält über diesen Spannungsabgriff 25 ein Spannungsmesssignal, welches Aufschluss darüber gibt, ob und wie viel Strom I durch die Glühbirne 23 des Fernlichts bzw. den Widerstand 24 fließt.

Erhält die Steuereinrichtung 19 gleichzeitig ein Signal von dem Lichtdetektor 16, welches anzeigt, dass ein anderer Verkehrsteilnehmer entgegenkommt, steuert sie den steuerbaren Schalter 21 auf, um dadurch den Strom I durch die Glühbirne 23 zu unterbrechen. Auf diese Weise wird durch automatische Unterbrechung des Fernlichtes der entgegenkommende Verkehr nicht mehr geblendet.

Zusätzlich oder alternativ kann die Steuereinrichtung 19 auch eine Mechanik zum Abblenden des Fernlichts, beispielsweise durch Schwenken der Frontscheinwerfer oder durch Absenken einer mechanischen Blende, betätigen. Zusätzlich oder alternativ kann die Steuereinrichtung 19 auch die Stromstärke des durch die Glühbirne 23 fließenden Stromes I reduzieren.

Das lichtempfindliche Halbleiterbauelement 18 kann auch als farbempfindlicher Lichtdetektor ausgebildet sein, um beispielsweise das rote Licht von Rücklichtern vorausfahrender Autos von dem weißen Licht entgegenkommender Kraftfahrzeugen unterscheiden zu können und eine entsprechend Entscheidung hinsichtlich des Abblenden des Fernlichtes treffen zu können.

Hierzu ist in der Steuereinrichtung 19 eine typischerweise als Logikschaltung ausgebildete Steuereinheit 27 vorgesehen. Diese Steuereinheit 27 analysiert außer der Farbe des eingestrahlten Lichts gegebenenfalls auch die Änderung bzw. die Geschwindigkeit einer Änderung der Lichtintensität, um hieraus Schlussfolgerungen für die entsprechende Entscheidung ableiten zu können. Es kann in diesem Zusammenhang beispielsweise auch vorgesehen sein, dass kurz aufblitzende Lichtintensitäten keine Reaktion der Steuereinrichtung 19 hinsichtlich des Abblenden des Fernlichtes hervorrufen.

Fig. 2 zeigt die Anzeigeeinrichtungen in einem Kraftfahrzeugcockpit im Zusammenhang mit der Erfindung. Vom Fahrer aus gesehen hinter dem Lenkrad 28 sind die Anzeigeinstrumente, wie beispielsweise Drehzahlmesser, Tacho, Tankanzeige und Uhr, angeordnet. Außerdem sind dort Kontrollleuchten 29 für die manuelle Einschaltung des Fernlichts 30 und für die automatische Ausschaltung des Fernlichts im Zustand der manuellen Einschaltung dargestellt.

Ist das Fernlicht manuell eingeschaltet und auch im aktiven Betriebszustand, so leuchtet üblicherweise die Kontrollleuchte 29. Wird die Steuereinrichtung 19 aktiviert und schaltet das Fernlicht wegen entgegenkommenden Verkehrs zum Beispiel vorübergehend ab, so wird zusätzlich der weitere Signalgeber in Form der weiteren Kontrollleuchte 30 aktiviert. Der Fahrer kann somit erkennen, dass er das Fernlicht eingeschaltet hat, dass dies im Augenblick aber automatisch ausgeschaltet ist und dass, wenn der Gegenverkehr ihn passiert haben wird, das Fernlicht durch die Steuereinrichtung automatisch wieder eingeschaltet werden wird, so dass er diesbezüglich nichts weiter unternehmen muss.

Diese Information kann dem Fahrer auch auf andere Weise, also ohne eine weitere Kontrollleuchte 30 übermittelt werden, zum Beispiel dadurch, dass die Kontrollleuchte 29 als Signalelement im Normalfall durchgehend leuchtet, sofern das Fernlicht eingeschaltet ist, und für den Fall, dass die Steuereinrichtung 19 das Fernlicht abschaltet, blinkt oder in seiner Leuchtintensität gedämpft wird.

Zusätzlich oder alternativ kann an Stelle des weiteren Signalgebers 30 auch ein akustisches Signal zu der Kontrollleuchte 29 hinzutreten, indem beispielsweise bei automatisch abgeschaltetem Fernlicht ein Brummen, ein Piepen oder ein sonstiges akustisches Signal über einen akustischen Signalgeber 31, zum Beispiel ein Lautsprecher, ertönt.

Zusätzlich oder alternativ kann außerdem vorgesehen sein, dass dem Fahrer die Änderung des Betriebszustandes optisch oder akustisch angezeigt wird, in dem Augenblick wenn die Steuereinrichtung 19 eingreift und das manuell eingeschaltete Fernlicht abschaltet, indem ein kurzer Signalton ertönt, die zusätzliche Kontrollleuchte 30 einmal kurz aufblinkt oder auch die Kontrollleuchte 29 einmal hell aufblinkt, um danach in einen dauerhaften Blinkzustand überzugehen, bis die automatische Abschaltung des Fernlichts durch die Steuereinrichtung 19 wieder aufgehoben wird.

Zusätzlich oder alternativ wäre es auch denkbar, wenn dem Fahrer die Änderung des Betriebszustandes des eigenen fernlichtes über das Lenkrad 28, beispielsweise durch ein Vibrieren desselben, mitgeteilt wird.

Sämtliche Anzeigemittel, also die optischen Anzeigen 29, 30, die akustischen Anzeigen 31 oder die sensitiven Anzeigen 28 sind in der Figur 3 lediglich schematisch mit Bezugszeichen 32 bezeichnet worden.

Auch beim automatischen Wiedereinschalten des Fernlichts 23 durch die Steuereinrichtung 19 kann ein solches einmaliges Signal abgegeben werden, um die Aufmerksamkeit des Fahrers zu erregen.

Durch die vorliegende Erfindung wird der Fahrer insgesamt entlastet. Ferner wird eine unerwünschte blendende Funktion des eigenen Fernlichts 23, die eine Gefährdung des Verkehrs bedeutet und unter Umständen einen Unfall zur Folge haben kann, vermieden.

Obgleich die vorliegende Erfindung vorstehend anhand eines bevorzugten Ausführungsbeispiels beschrieben wurde, ist sie nicht darauf beschränkt, sondern auf vielfältige Art und Weise modifizierbar.

Insbesondere versteht es sich von selbst, dass das Fernlicht und/oder das Abblendlicht nicht notwenigerweise durch eine Glühbirne ausgebildet sein können, sondern auch durch eine entsprechende Gasentladelampe, eine Halogenlampe, Leuchtdioden (LEDs) oder dergleichen ausgebildet sein können. Auch ist die Funktionalität der Steuereinrichtung, des Lichtdetektors selbstverständlich auch durch andere Anordnungen und Einrichtungen realisierbar, wenngleich die beschriebenen Anordnungen und Einrichtungen besonders bevorzugte Ausgestaltungen darstellen.

## Patentansprüche

1. Beleuchtungseinrichtung für ein Personenbeförderungsmittel, insbesondere für ein Kraftfahrzeug mit einem Beleuchtungselement (23), das manuell ein-und ausschaltbar ist und das unter bestimmten Umgebungsbedingungen durch eine Steuereinrichtung (19) abschaltbar, abblendbar oder dämpfbar ist, **dadurch gekennzeichnet, dass** die Steuereinrichtung (19) mit einer Signaleinrichtung (29 - 32) verbunden ist, die ein erstes Signal an den Führer des Personenbeförderungsmittels abgibt, wenn das Beleuchtungselement (23) manuell eingeschaltet ist und die ein von dem ersten Signal verschiedenes zweites Signal abgibt, wenn das Beleuchtungselement (23) manuell eingeschaltet und durch die Steuereinrichtung (19) abgeschaltet, gedämpft oder abgeblendet ist.

2. Beleuchtungseinrichtung nach Anspruch 1, **dadurch gekennzeichnet, dass** als Eingangsgröße für die Steuereinrichtung (19) eine gemessene Lichtintensität dient.

3. Beleuchtungseinrichtung nach Anspruch 2, **dadurch gekennzeichnet, dass** zur Erfassung der Lichtintensität ein in Fahrtrichtung ausgerichtetes lichtempfindliches Bauelement (16) vorgesehen ist.

4. Beleuchtungseinrichtung nach Anspruch 3, **dadurch gekennzeichnet, dass** das lichtempfindliche Bauelement (16) zur Unterscheidung verschiedener Farben des Lichts eingerichtet ist und dass die Steuereinrichtung (19) auf verschiedene Lichtfarben unterschiedlich reagiert.

5. Beleuchtungseinrichtung nach wenigstens einem der Ansprüche 3 oder 4, **dadurch gekennzeichnet, dass** die Änderungsgeschwindigkeit der gemessenen Lichtintensität erfasst wird.

6. Beleuchtungseinrichtung nach wenigstens einem der vorstehenden Ansprüche, **dadurch gekennzeichnet, dass** die Signaleinrichtung (29 - 32) eine Kontrollleuchte (29, 30) aufweist.

7. Beleuchtungseinrichtung nach Anspruch 6, **dadurch gekennzeichnet, dass** die Kontrollleuchte (29, 30) bei manuell eingeschaltetem Beleuchtungselement (23) und automatischer Abschaltung entweder blinkt oder bezüglich der Lichtstärke gedämpft ist.

8. Beleuchtungseinrichtung nach Anspruch 6, **dadurch gekennzeichnet, dass** die Signaleinrichtung (29 - 32) zusätzlich zu der Kontrollleuchte (29) einen weiteren Signalgeber (30, 31) aufweist, der bei manuell eingeschaltetem Beleuchtungselement (23) und automatischer Abschaltung ein optisches oder akustisches Signal abgibt.

9. Verfahren zum Betrieb einer Beleuchtungseinrichtung nach wenigstens einem der Ansprüche 1 bis 8, **dadurch gekennzeichnet, dass** die Signaleinrichtung (29 - 32) während der Dauer der Abschaltung des Beleuchtungselements (23) durch die Steuereinrichtung (19) ein zweites Signal abgibt, das von dem ersten Signal verschieden ist, welches abgegeben wird, wenn das Beleuchtungselement (23) eingeschaltet ist.

10. Verfahren zum Betrieb einer Beleuchtungseinrichtung nach wenigstens einem der vorstehenden Ansprüche 1 bis 8, **dadurch gekennzeichnet, dass** die Signaleinrichtung (29 - 32) zu dem Zeitpunkt, wenn die Steuereinrichtung (19) das manuell eingeschaltete Beleuchtungselement (23) abschaltet, abblendet oder dämpft und/oder wenn die Steuereinrichtung (19) die genannte Einwirkung auf das Beleuchtungselement (23) rückgängig macht, ein besonderes Signal abgibt, um anzuzeigen, dass die Betriebsart des Beleuchtungselementes (23) geändert wird.
